# EUROPEAN PATENT APPLICATION

(11) **EP 4 667 434 A1**
(43) Date of publication of application: **24.12.2025**
(21) Application number: 24182634.6
(22) Date of filing: 17.06.2024
(51) Int. Cl.: C04B 7/04, C04B 7/24

(54) **A METHOD OF PRODUCING CALCIUM OXIDE FROM A SOURCE OF CALCIUM SULFATE**

(71) Applicant: Holcim Technology Ltd, 6300 Zug (CH)
(72) Inventor: STOFFEL, Beat, 5113 Holderbank (CH); SEYLER, Laurent, 5113 Holderbank (CH); BOES, Karl-Heinz, 5113 Holderbank (CH)
(74) Representative: SONN Patentanwälte GmbH & Co KG

(57) **Abstract**

A method of producing calcium oxide from a source of calcium sulfate, comprising a step of desulfurizing the source of calcium sulfate in the absence of a reducing agent in a desulfurization reactor to obtain calcium oxide and sulfur dioxide, wherein the source of calcium sulfate comprises less than 20% by weight of anhydrite.

## Description

The invention refers to a method of producing calcium oxide from a source of calcium sulfate.

The production of calcium oxide is traditionally done by calcining a composition that comprises a source of calcium carbonate, such as limestone or chalk, in an industrial kiln that operates continuously at a temperature of at least 900°C. During this calcination step, the source of calcium carbonate decarbonates to form carbon dioxide and calcium oxide. Furthermore, the kiln used for the production of calcium oxide is heated by a burner, which produces heat from burning carbon containing materials, such as fuels and waste materials, which also produces carbon dioxide. These two processes run simultaneously in a calcium oxide manufacturing plant and produce high amounts of carbon dioxide.

An alternative method of production of calcium oxide that does not require the use of calcium carbonate materials is based on the Müller Kühne (MK) process, wherein a source of calcium sulfate is used as the calcium providing material. In the MK-process calcium sulfate, for example in the form of gypsum, is reduced to calcium sulfide which reacts with calcium sulfate to give sulfur dioxide and calcium oxide. The MK-process starts at temperatures of around 800°C and requires a source of carbon, which acts as a reducing agent. The calcium oxide resulting from the MK-process can be further processed to obtain cement clinker, resulting in the production of Portland cement that has a lower carbon dioxide footprint.

In order to produce cement clinker from calcium oxide obtained by the MK-process, silica, alumina and iron oxide are added to obtain a raw meal, which is heated to a temperature of about 1'450°C in a rotary kiln.

The methods described above require the use of a reducing agent to produce calcium oxide from a source of calcium sulfate by desulfurizing the latter. Since a carbon source is usually used as a reducing agent, this desulfurization process creates carbon dioxide emissions, which adds complexity to the process and increases costs, since measures would have to be undertaken for sequestering carbon dioxide. Above all, carbon dioxide increases the carbon footprint of the production process.

Therefore, the instant invention aims at improving a method of producing calcium oxide by overcoming the problems mentioned above and decreasing the carbon footprint.

To solve this and other objects, the invention provides a method of producing calcium oxide from a source of calcium sulfate, comprising a step of desulfurizing the source of calcium sulfate in the absence of a reducing agent to obtain calcium oxide and sulfur dioxide, wherein the source of calcium sulfate comprises less than 20% by weight of anhydrite.

Thus, the invention is based on the idea to desulfurize the source of calcium sulfate without using a reducing agent, such as a carbon source. In this way, the process does not produce any carbon dioxide, thus contributing to a reduction of greenhouse gas emissions.

It has been found that desulfurizing can be carried out by thermally decomposing the source of calcium sulfate by applying a heat treatment at a temperature of > 2'000°C, preferably > 3'000°C to the source of calcium sulfate.

According to a particularly preferred embodiment, the heat treatment is applied by means of a plasma burner. Preferably, the plasma burner may operate continuously at a temperature of 2'000-5'000°C. It has been found that such high temperatures alone are sufficient to produce calcium oxide and sulfur dioxide from a source of calcium sulfate, wherein a preferred embodiment provides that the calcium sulfate feed passes the flame of the plasma burner directly.

Using a plasma burner has the additional advantage of suppressing the need of a fuel to be burnt and reduces the amount of carbon dioxide emitted directly during the entire process.

The application of the high temperatures caused by a plasma burner results in a thermal decomposition of CaSO₄ according to the following formula:

CaSO₄ -> CaO + SO₂ + 1/2 O₂

According to a preferred embodiment, the plasma burner is operated with steam or carbon dioxide as a carrier gas. This has the advantage of providing a low oxygen content in the kiln atmosphere, as no fuels needs to be combusted. The amount of NOx can thus be avoided and the reformation of SO₃ (back reaction to CaSO₄) is suppressed.

Various sources of calcium sulfate are available, such as natural gypsum, anhydrite, hemihydrate, waste calcium sulfate and/or phosphogypsum, the latter being widely available as it is most often landfilled in large quantities, being a by-product of the production of phosphate-based fertilizers or phosphoric acid.

The source of calcium sulfate used in the claimed method comprises less than 20% by weight of anhydrite. Many sources of calcium sulfate comprise water which is chemically bound to calcium sulfate, such as gypsum (CaSO₄•2H₂O) or hemihydrate (CaSO₄•1/2H₂O). Phosphogypsum being a calcium sulfate hydrate formed as a by-product of the production of fertilizer also has chemically bound water. This chemically bound water dehydrates in the desulfurization reactor. In the case of gypsum, for each mole of calcium oxide produced, 2 moles of water are produced. The off-gas from the desulfurization reactor will then contain steam in addition to sulfur dioxide.

In a preferred embodiment, the source of calcium sulfate comprises a mixture of gypsum and phosphogypsum, preferably 1-99 wt.% gypsum and 1-99 wt.% phosphogypsum, more preferably 1-50 wt.% gypsum and 10-99 wt.% phosphogypsum. The use of gypsum allows to dilute phosphogypsum impurities that would reduce the quality of the calcium oxide and the clinker quality.

In a preferred embodiment, the steam fraction of the off-gas is advantageously recirculated to the plasma burner and used as a carrier gas for the plasma burner. In this way, the desulfurization process can be operated by using a plasma burner using less, or no, carbon dioxide as a carrier gas, reducing the carbon footprint of the method. The steam can also be used for the production of sulfuric acid from the sulfur dioxide produced by the claimed method.

Preferably, the source of calcium sulfate is free of carbon.

The calcium oxide obtained from the method of the present invention may hydrate, for example due to water vapor in the air, to partially form calcium hydroxide.

In another embodiment, the invention relates to the production of cement clinker from the calcium oxide obtained as described above, where silica, alumina oxide and iron oxide are mixed with the calcium oxide to obtain a raw meal that is suitable for the production of cement clinker in a clinkerization reactor. This embodiment provides a two-step process in which the desulfurization step and the production of cement clinker are carried out in separate reactors.

In a preferred embodiment, the sources of silica, alumina and iron oxide comprise recycled or waste materials. In a preferred embodiment, the sources of silica, alumina and iron oxide comprise at least 40 wt.-% of recycled or waste materials.

The recycled or waste materials can be selected from any of the following materials: mineral waste materials from construction and demolition such as concrete demolition waste, recycled aggregates, recycled bricks, coal ashes, or steel slags.

The use of waste and recycled materials decreases the environmental impact of this production process, by minimizing the need to use virgin materials.

In order to maximize the surface to volume ratio of the calcium sulfate source, thereby enhancing the energy transfer from the plasma burner to the material, the source of calcium sulfate is preferably introduced into the desulfurization reactor in the form of a powder, preferably having a maximum particle size of 300 µm. Herein, the particle size is measured by sieving.

Considering that some sources of calcium sulfate have a high free water content, a preferred embodiment of the invention provides that the source of calcium sulfate is dried to a free water content of < 2 wt.-%, preferably less < 1 wt.-%, before being introduced into the desulfurization reactor. This has the advantage of increasing the efficiency of the desulfurization reactor. Free water is different than chemically bound water, as free water evaporates at temperatures below 100°C. Chemically bound water does not evaporate at temperatures below 100°C, it is removed from calcium sulfate, in the present case, by dehydration at temperatures typically above 150°C.

The sulfur dioxide contained in the off-gas of the desulfurization reactor can be separated from other constituents, for example by a scrubber, to form sulfuric acid, which would be a by-product of the present process that can be made further use of in other industrial applications.

The clinkerization reactor may preferably be designed as a rotary kiln. In particular, an existing rotary kiln of a cement manufacturing plant may be used.

The clinkerization reactor may be heated by burning various types of fuels. However, in order to reduce the carbon footprint of the process, a preferred embodiment provides that the calcination step in the second reactor is carried out by using at least one plasma burner. The at least one plasma burner can optionally be used in combination with other burners, such as a dihydrogen.

In order to prevent sulfur compounds produced in the desulfurization reactor from being entrained into the clinkerization reactor, the sulfur dioxide is separated from the calcium oxide, before the calcium oxide is fed to the clinkerization reactor.

Alternatively, the calcium oxide and the off-gasses withdrawn from the desulfurization reactor and the silica, alumina and iron oxide containing materials are introduced into a heat exchanger, wherein the sensible heat of the calcium oxide and of the off-gasses is used to heat and dry the source of calcium sulfate to remove free water. Alternatively this heat can be used to preheat the silica, alumina and iron oxide containing materials in the heat exchanger. The preheated raw material mixture is then discharged from the heat exchanger and introduced into the clinkerization reactor. The off-gasses that haven been separated from the raw material mixture may be further processed, as described above.

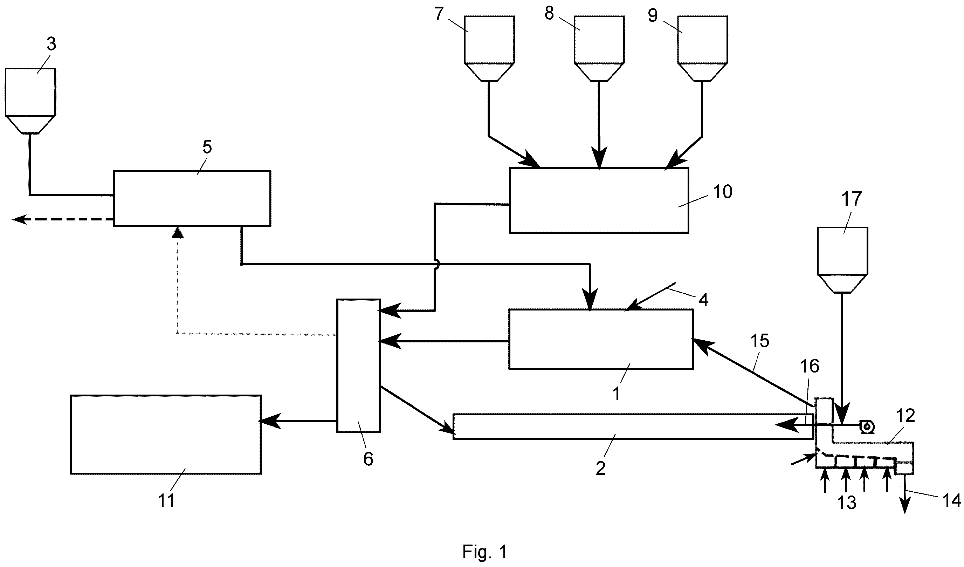

The invention will now be described by means of an exemplary embodiment illustrated in Fig. 1. The figure shows a desulfurization reactor 1 and a clinkerization reactor 2. The desulfurization reactor 1 is designed to desulfurize a source of calcium sulfate 3 by means of a plasma burner 4. The source of calcium sulfate 3 is first dehydrated in a dryer 5. The source of calcium sulfate is introduced into the desulfurization reactor 1 and desulfurized by means of the plasma burner 4, in particular by passing a stream of pulverulent calcium sulfate through the flame of the plasma burner 4. Steam may be used as a carrier gas for the plasma burner 4. The resulting mixture of calcium oxide, sulfur dioxide, and steam is withdrawn from the desulfurization reactor 1 and introduced into a heat exchanger 6.

A silica containing corrective material 7, an alumina containing corrective material 8 and iron oxide containing corrective material 9 are mixed in a mixer 10 and the mixture is added into the heat exchanger 6, where it is heated in heat exchange with the substances coming from the desulfurization reactor 1. The gaseous substances contained in the heat exchanger 6 are removed from the heat exchanger 6 separately from the solid substances. In doing so, gaseous sulfur dioxide, and steam are introduced into the gas conditioning and scrubbing unit 11, where the gases may be separated from each other. Steam may be recycled to be used as a carrier gas for plasma burner 4.

The raw material mixture comprising calcium oxide and the corrective materials is introduced into the clinkerization reactor 2, which is designed as a rotary kiln, and is calcined in order to obtain cement clinker. The cement clinker leaving the clinkerization reactor 1 is cooled in a clinker cooler 12 in heat exchange with cooling air 13. The cooled clinker is extracted from the clinker cooler 12 at 14. The sensible heat of the cooling air leaving the clinker cooler 12 via line 15 may be used in the desulfurization reactor 1.

The clinkerization reactor 2 is operated by a burner 16, in which fossil and/or alternative fuels 17 may be burned.

Alternatively, the clinkerization reactor 2 can also be heated by means of a plasma burner.

## Claims

1. A method of producing calcium oxide from a source of calcium sulfate, comprising a step of desulfurizing the source of calcium sulfate in the absence of a reducing agent in a desulfurization reactor to obtain calcium oxide and sulfur dioxide, wherein the source of calcium sulfate comprises less than 20% by weight of anhydrite.

2. Method according to claim 1, wherein the step of desulfurizing is carried out to produce calcium oxide which has a sulfur content of less than 0.1% by weight.

3. Method according to claim 1 or 2, wherein the step of desulfurizing is carried out by thermally decomposing the source of calcium sulfate by applying a heat treatment at a temperature of > 2'000°C, preferably > 3'000°C to the source of calcium sulfate.

4. Method according to claim 3, wherein the heat treatment is applied by means of a plasma burner, in which the source of calcium sulfate is preferably led through a plasma flame emitted by the plasma burner.

5. Method according to claim 4, wherein the plasma burner is operated with steam or carbon dioxide as a carrier gas.

6. Method according to any one of claims 1 to 5, wherein steam contained in an off-gas from the desulfurization reactor, said off-gas comprising sulfur dioxide and steam, is recycled to the plasma burner as a carrier gas.

7. Method according to any one of claims 1 to 6, wherein the source of calcium sulfate is introduced into the desulfurization reactor in the form of a powder, preferably having a maximum particle size of 300pm measured by sieving.

8. Method according to any one of claims 1 to 7, wherein the source of calcium sulfate is dried to a free water content of < 2 wt.-% before being introduced into the desulfurization reactor.

9. Method according to any one of claims 1 to 8, wherein the source of calcium sulfate is gypsum, hemihydrate, waste calcium sulfate and/or phosphogypsum.

10. Method according to any one of claims 1 to 9, wherein, in a second step, the calcium oxide is introduced into a clinkerization reactor and is calcined together with silica, alumina and iron oxide containing material(s), in order to obtain cement clinker.

11. Method according to claim 10, wherein the clinkerization reactor is designed as a rotary kiln.

12. Method according to claim 10 or 11, wherein the step of calcining the calcium oxide in the clinkerization reactor is carried out by using at least one plasma burner.

13. Method according to any one of claims 10 to 12, wherein the sulfur dioxide obtained from the desulfurization step is separated from the calcium oxide, before the calcium oxide is fed to the second step.

14. Method according to any one of claims 10 to 13, wherein the silica, alumina and iron oxide containing material(s) comprise recycled or waste material(s).

15. Method according to claim 14, wherein the recycled or waste material(s) are selected from any of the following materials: mineral waste materials from construction and demolition such as concrete demolition waste, recycled aggregates, recycled bricks, coal ashes, or steel slags.

16. Method according to any one of claims 1 to 15, wherein the source of calcium sulfate comprises a mixture of gypsum and phosphogypsum, preferably 1-99 wt.% gypsum and 1-99 wt.% phosphogypsum, more preferably 1-50 wt.% gypsum and 10-99 wt.% phosphogypsum.
